# EUROPEAN PATENT APPLICATION

(11) **EP 2 204 964 A1**
(43) Date of publication of application: **07.07.2010**
(21) Application number: 08861883.0
(22) Date of filing: 13.10.2008
(51) Int. Cl.: H04L 29/06

(54) **METHOD AND DEVICE FOR REALIZING DATA SYNCHRONIZATION**

(30) Priority: 12.12.2007 CN 200710195707
(71) Applicant: Huawei Technologies Co., Ltd., Longgang District, Shenzhen Guangdong 518129 (CN)
(72) Inventor: LUO, Yaoping, Shenzhen Guangdong 518129 (CN); LI, Kepeng, Shenzhen Guangdong 518129 (CN); WANG, Rui, Shenzhen Guangdong 518129 (CN)
(86) International application number: PCT/CN2008/072671
(87) International publication number: WO 2009/076812

(57) **Abstract**

A method for synchronizing data between a client and a server is disclosed. The method includes: receiving a synchronization instruction and data items to be synchronized; and performing synchronization for the data items according to the synchronization instruction. Another data synchronization method includes: receiving a synchronization instruction and properties to be synchronized in each data item; and performing synchronization for the properties to be synchronized according to the synchronization instruction. The embodiments of the present invention reduce retransmission of the data that needs no update or reduce futile data transmission drastically, save traffic of data transmission, save network resources, and improve the data synchronization efficiency.

## Description

This application claims priority to Chinese Patent Application No. 200710195707.2, filed with the Chinese Patent Office on December 12, 2007 and entitled "Method and Apparatus for Synchronizing Data", which is hereby incorporated by reference in its entirety.

### FIELD OF THE INVENTION

The present invention relates to mobile communication technologies, and in particular, to a method and an apparatus for synchronizing data.

### BACKGROUND

The modem society is an information society. The user can receive and send information anytime anywhere, and can use a handheld device to execute applications in the device anytime anywhere. The exchanged data and the execution results need to be stored in the handheld device, and need to keep consistent with such type of data in other data devices. Through data communication, the data keeps consistent between the terminal and the server, namely, the data is synchronized.

The Synchronization Markup Language (SyncML) protocol is a new universal standard developed in order to implement data synchronization. It is developed by the SyncML team, and is now a synchronization protocol widely acceptable to users and universally applicable in the industry.

Outlined below is a SyncML synchronization framework.

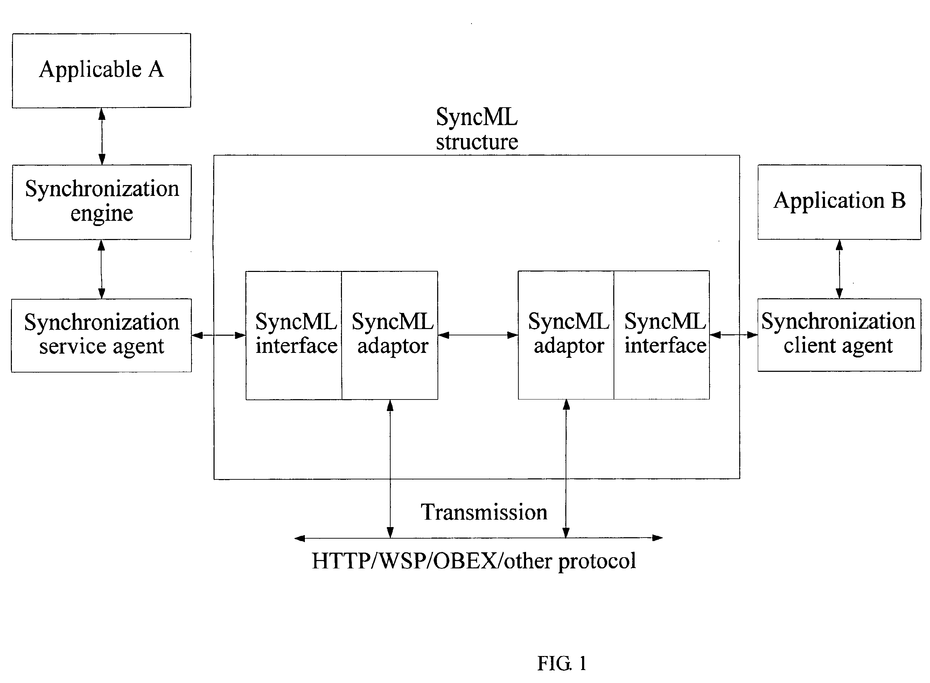

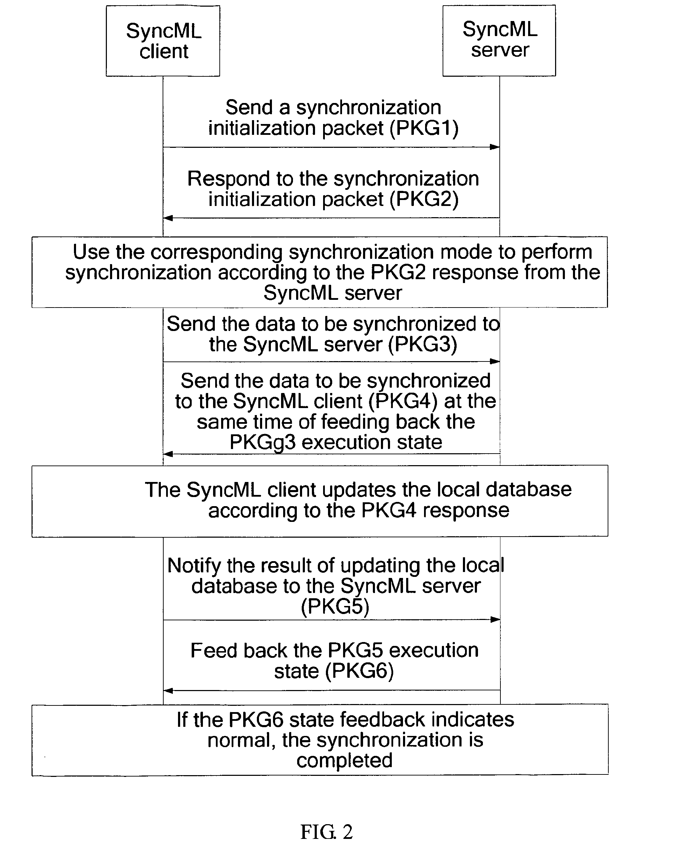

In FIG 1, the part in the line box is a SyncML framework under the SyncML standard, and the part outside the line box is a data synchronization protocol. The SyncML framework is composed of three parts: SyncML data format, SyncML adaptor, and SyncML functional interface. The SyncML synchronization protocol defines a process of exchanging messages between a SyncML client and a SyncML server. FIG. 2 describes message interaction in the synchronization between the SyncML client and the SyncML server. The SyncML client sends a SyncML message that carries client data modification information to the SyncML server, and then the SyncML server synchronizes the data stored in the server according to the data carried in the SyncML message and returns the modification result information to the SyncML client.

Based on the foregoing data synchronization technology, the conventional art implements data synchronization through the following technical solution:

### 1. Using a change log

The Data Synchronization (DS) protocol stipulates that: the DS client and the DS server need to maintain the change log information of the device database in a session so that the devices can identify the changed data items. Therefore, only the changed data items need to be synchronized, and the information required to be transmitted is reduced. However, the change log in the conventional art can record only the change information of data items.

### 2. Synchronizing data items

In the existing DS technology, the DS client and DS server perform synchronization by using data item as a unit. In this way, much information that needs no synchronization is transmitted. The terminal needs to perform synchronization for the whole data item, which leads to waste of resources.

### 3. Using an Anchor to mark the synchronization progress

Currently, an anchor is used to mark the previous data synchronization between the client and the server in the data synchronization mechanism. However, all anchors are of a database level, and are incapable of marking the step progress of the data item level.

### 4. Obtaining Device Information (DevInfo) and a database directory structure

The DS standard uses Document Type Definition (XML DTD) to define the standard method of describing device information and defines the standard method of obtaining the device information of the opposite party between the DS client and the DS server. However, the conventional art enables obtaining of the entirety of the device information, but does not enable obtaining of the database directory structure.

### 5. Data fingerprint identification

Currently, data elements can be identified through data fingerprints. Data fingerprints are designed for the server to check whether the data received from the terminal is the same as the data stored in the server. The server performs synchronization only for the inconsistent data, and the inconsistent data is found through comparison of data fingerprints. In this way, the traffic of data required to be transmitted for synchronization is reduced, and futile transmission of data is avoided. Moreover, data fingerprints are also useful for resuming transmission at break points. In the conventional art, data fingerprints are useful only to the data item, but not useful to the property.

In the process of developing the present invention, the inventors find at least the following problems in the conventional art:
(1) In the data synchronization mechanism in the conventional art, all data in the database needs to be exchanged between the client and the server, and such data includes much data that is already consistent and does not need to be exchanged, thus occupying much more bandwidth of the network for data synchronization and reducing the efficiency of data synchronization;
(2) the function of obtaining the device information and obtaining the database directory structure is not powerful enough; and
(3) it is impossible to implement the change logs of the property, data fingerprints of the property, and generating or sending of data synchronization instructions of the property.

### SUMMARY

The embodiments of the present invention provide a method and an apparatus for performing refined data synchronization of the property and performing partial synchronization to reduce retransmission of the data that needs no update or reduce futile data transmission drastically, improve the data synchronization efficiency, obtain the device information and the database directory information hierarchically, reduce the resource waste caused by futile data transmission, save the traffic of data transmission, and improve the function of obtaining information.

A method for synchronizing data between a client and a server in an embodiment of the present invention includes:
receiving a synchronization instruction and data items to be synchronized; and
performing synchronization for the data items according to the synchronization instruction.

Another method for synchronizing data between a client and a server in an embodiment of the present invention includes:
receiving a synchronization instruction and properties to be synchronized in each data item;
   and
performing synchronization for the properties to be synchronized according to the synchronization instruction.

A sending apparatus provided in an embodiment of the present invention includes:
a data storing module, adapted to store data;
a data recording module, adapted to search for and record data items to be synchronized in the data stored in the data storing module; and
a sending module, adapted to send a synchronization instruction and the data items to be synchronized.

A receiving apparatus provided in an embodiment of the present invention includes:
a receiving module, adapted to receive a synchronization instruction and data items to be synchronized; and
an executing module, adapted to perform synchronization for the data items according to the synchronization instruction.

Compared with the conventional art, the embodiments of the present invention at least bring these benefits: Through the method and the apparatus of performing refined data synchronization of the property and performing partial synchronization, the data change information of the property level is synchronized between devices according to an instruction, the resource waste caused by retransmission of data that needs no update or by futile data transmission is reduced and the function of obtaining device information and database directory structure information hierarchically is enhanced, thereby reducing the transmission traffic, saving network resources, and improving the efficiency of data synchronization.

### BRIEF DESCRIPTION OF THE DRAWINGS

FIG 1 shows a SyncML synchronization framework in the conventional art;

FIG. 2 shows a functional process of a SyncML client and a SyncML server in the conventional art;

FIG 3 is a flowchart of data synchronization performed through change logs in the first embodiment;

FIG. 4 is a flowchart of data synchronization performed through anchors when the processing is normal in the third embodiment;

FIG. 5 is a flowchart of data synchronization performed through anchors when the processing is abnormal in the third embodiment;

FIG. 6 shows a database directory structure obtained hierarchically in the fifth embodiment;

FIG 7 shows structures of a sending apparatus and a receiving apparatus in an embodiment; and

FIG. 8 shows structures of another sending apparatus and another receiving apparatus in an embodiment.

### DETAILED DESCRIPTION OF THE EMBODIMENTS

The embodiments of the present invention are elaborated below with reference to accompanying drawings.

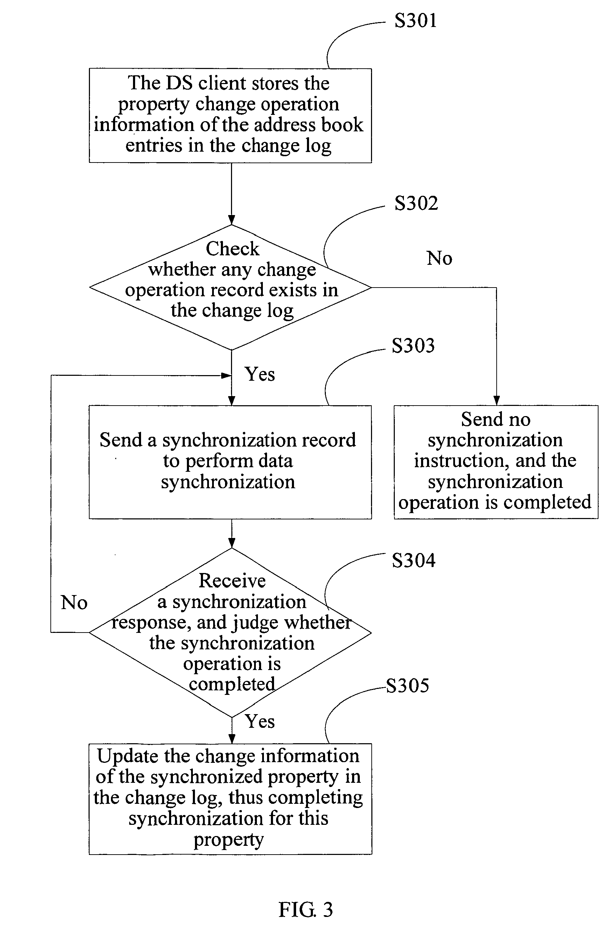

The first embodiment of the present invention is a method for synchronizing data based on maintenance of change logs of a property. As shown in FIG. 3, supposing that address book data needs to be synchronized, the synchronization process includes the following steps:

Step S301: After completion of the previous synchronization session, the user modifies the address book entries on the device, and the DS client stores the data modification operation information in the change log, including:
(1) ID of address book entry (Local Unique Identifier, LUID);
(2) Change Type; and
(3) Changed Property.

When the Changed Property is not null, the Change Type indicates the change type of a property; when the Changed Property is null, the Change Type indicates the change type of an address book entry.

When the synchronization session begins, the DS client identifies the properties that have changed after the previous synchronization session according to the record in the change log, and only the changed properties need to be synchronized.

It is assumed that the address book entries stored on the device are as follows:

**Table 1 Data before modification of the address book**

| LUID | Data |
|---|---|
| 1012 | BEGIN:VCARD VERSION:2.1 N:Doe;John;;; TEL;HOME:(321) 654-987 END:VCARD |
| 1013 | BEGIN:VCARD VERSION:2.1 N: Murphey; David;;; TEL;HOME:(123) 456-789 END:VCARD |
| 1014 | BEGIN:VCARD VERSION:2.1 N: Smith;Helen;;; TEL;HOME:(100)200-300 END:VCARD |

As shown in Table 1, after the previous synchronization session, the user modifies the address book entries on the device in the following way:
(1) modify the home telephone number (TEL;HOME) of the address book entry whose LUID is 1012 to (321)654-988;
(2) add a TITLE property in the address book entry whose LUID is 1013, and set the value of the TITLE property to "Worker"; and
(3) delete the home telephone number (TEL;HOME) of the address book entry whose LUID is 1014.

According to the foregoing modification operations, the DS client should record the change log shown in Table 1, where the Changed Property part is newly added in the present invention:

**Table 2 Change log**

| LUID | Change Type | Changed Property |
|---|---|---|
| 1012 | Replace | TEL;HOME |
| 1013 | Add | TITLE |
| 1014 | Delete | TEL;HOME |

Step S302: When initiating the next synchronization session, the DS client checks the change log, and checks for existence of any modification operation record newly added after the previous synchronization operation, as detailed below.
(1) If no newly added modification operation record exists in the change log, it is not necessary to update the data synchronization or send any synchronization instruction, and the synchronization session is completed directly.
(2) If the change log includes any change information indicating that the local database has changed after the previous synchronization session, the subsequent synchronization operations go on. As shown in Table 2, the change information includes:
   The "TEL;HOME" property of the address book entry whose LUID is 1012 is modified;
      a "TITLE" property is added in the address book entry whose LUID is 1013; and
      the "TEL;HOME" property of the address book entry whose LUID is 1014 is deleted.

Step S303: A synchronization instruction is sent, and data is synchronized and updated according to the newly added change information. For example, according to the change information shown in Table 2, the DS client needs to send the following synchronization instructions:
Replace: modify the "TEL;HOME" property of the address book entry whose LUID is 1012;
Add: add a "TITLE" property in the address book entry whose LUID is 1013; and
Delete: delete the "TEL;HOME" property of the address book entry whose LUID is 1014.

The foregoing three instructions modify the target property directly, thus reducing the data required to be transmitted in the data synchronization process and reducing the operation modification.

Step S304: The DS client receives the synchronization operation response of each property, and judges whether the foregoing synchronization operations are completed according to the content of the response packet. The detailed judgment process includes:
if the data shows that the synchronization of a property is not completed, repeating step S303 to re-synchronize the target property that has not been synchronized; and
if the data shows that the synchronization of a property is completed successfully, proceeding with the subsequent operations.

Step S305: If the response to the synchronization of a property reveals a successful operation result, the DS client updates the information about the synchronized property in the change log by moving the property out of the Changed Property; when all properties in the Changed Property are synchronized, modifying the corresponding Change Type to indicate completion of synchronizing the whole data element.

For example, before the synchronization begins, "change log" in Table 2 shows three modified data entries. In the synchronization session process, the synchronization initialization packet sent by the DS client includes three synchronization commands: The first command is "Replace 1012", the second command is "Add 1013", and the third command is "Delete 1014".

If the synchronization response returned by the DS server shows that the first command is executed successfully but the second command and the third command are executed unsuccessfully, or if no response to the second command or the third command is received, the DS client knows that the entry 1012 has kept synchronized between the DS server and the DS client, and the DS client may move this entry out of the change log. In this way, in the new synchronization sessions initiated because the synchronization is not completed, the DS client does not retransmit the data that has been synchronized.

By contrast, in the conventional art, in the case of the modification operation in step S301, the change log recorded by the DS client is shown in Table 3:

**Table 3 Change log record information in the conventional art**

| LUID | Change Type |
|---|---|
| 1012 | Replace |
| 1013 | Replace |
| 1014 | Replace |

According to the conventional art, at the time of initiating the next synchronization session, the DS client checks the change log and finds that the three address book entries numbered 1012, 1013, and 1014 have been modified after the previous synchronous session, and therefore, three Replace instructions are required to send the complete address book entries to the DS server to keep synchronization. In this case, the synchronization data required to be transmitted is not property information, but complete address book entries, and the data transmission increases significantly.

Moreover, the change log is emptied only after a session is completed successfully. If the session fails, the change log is not updated, and all modified records need to be retransmitted. The efficiency is low.

The foregoing comparison reveals: By maintaining the change log of the property level, the technical solution under the present invention reduces the information transmitted in the data synchronization session, and improves the synchronization efficiency, which helps solve the synchronization conflict between the client and the server.

The second embodiment of the present invention is a method for synchronizing properties of data items directly. Supposing that the data of an address book needs to be synchronized, the synchronization process is as follows:

It is assumed that after the previous synchronization session between the DS client and the DS server is completed, a home telephone number in a vCard entry on a DS client is modified, namely, the "TEL;HOME" property in a vCard entry whose UID is 1023 is modified.

In this synchronization session, when the DS server performs synchronization, the DS client may send synchronization instructions in the following way:

```
        <Sync>
        <CmdID>7</CmdID>
        <Target><LocURI>./dev-contacts</LocURI></Target>
        <Source><LocURI>./contacts/james bond</LocURI></Source>
        <Replace>
        <CmdID>8</CmdID>
        <Meta><Type xmlns='syncml:metinf>text/x-vcard</Type></Meta>
        <Item>
        <Target><LocURI> 1023?TEL;HOME</LocURI> </Target>
        <Data>
        BEGIN:VCARD
        VERSION:2.1
        N:Doe;John;;;
        TEL;HOME:(321) 654-987
        END:VCARD
        </Data>
        </Item>
        </Replace>
        </Sync>
```

In the foregoing instructions, the ID of the data item and the ID of the Changed Property are specified in the synchronized target address, and the receiver is notified that only the specified property needs to be synchronized.

In the "1023?TEL;HOME" part of <LocURI> in the instructions above, "1023" is an ID of the data item corresponding to the target property, and "TEL;HOME" is the name of the target property to be modified.

Besides, the synchronization data carried in the synchronization instruction may be the complete data item, or only the changed property. For example, the foregoing instructions carry complete data items.

After receiving the data synchronization command, the receiver synchronizes only the specified property as notified by the sender, thus reducing the synchronization operation for futile information. For example, according to the foregoing instructions, the receiver needs only to modify the "TEL;HOME" property.

In the second embodiment, a property may be expressed in many formats. For example, "LUID@AttributeName" may represent a property of the data element. The format of the property is appropriate only if it is agreed by both parties and correctly directed to the property to be synchronized. The embodiments of the present invention do not restrict the format of the property.

The third embodiment of the present invention is a method for synchronizing data by using anchors of a data item. Supposing that the data of an address book needs to be synchronized, the synchronization process is as follows:

The DS client and the DS server save the ID of the data item (UID) as an anchor value so as to accurately record the detailed synchronization state of the synchronization session.

This embodiment analyzes a normal processing process and an abnormal processing process to describe the method of managing and maintaining anchors.

It is assumed that in the previous synchronization session, the DS client synchronizes all the data items before LUID 1011 to the DS server successfully according to the order of the LUID, and the DS client anchor value stored by both parties is 1011.

In order to complete the synchronization of the data items whose LUID is 1012, 1013, and so on, the DS client initiates a new data synchronization session. Depending on whether the synchronization process is smooth, the processing comes in two circumstances.

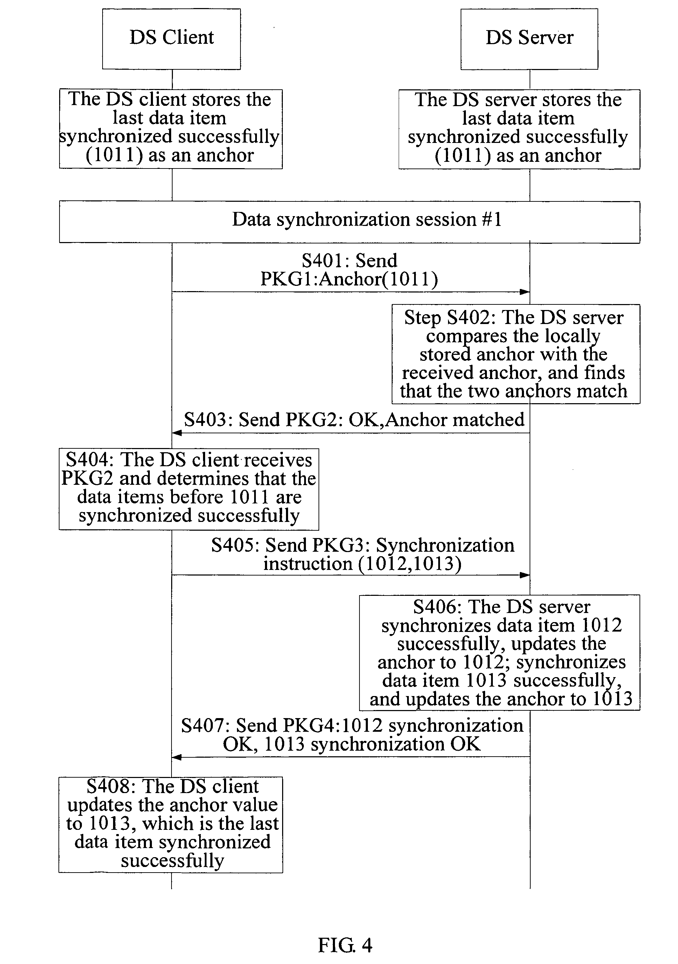

As shown in FIG. 4, the normal processing process of a synchronization session includes the following steps:

Step S401: The DS client sends an anchor value "1011" to the DS server through an initialization synchronization packet Pkg1.

Step S402: The DS server compares the locally stored DS client anchor with the received anchor, and finds that the two anchors are the same and may be matched.

Step S403: The DS server sends Pkg2 to the DS client. Pkg2 carries information that indicates anchor matching.

Step S404: After receiving the information that indicates anchor matching, the DS client determines that the data items before LUID 1011 have been synchronized.

Step S405: The DS client sends Pkg3 to the DS server. Pkg3 carries an instruction of synchronizing the data items that begin with the next LUID, namely, an instruction of synchronizing the data items corresponding to LUID 1012 and LUID 1013.

Step S406: The DS server executes the synchronization instruction according to the order of the LUID, including the following operations:
execute an instruction of synchronizing the data item corresponding to LUID 1012, and update the anchor to 1012 after executing the instruction successfully and completing the synchronization; and
execute an instruction of synchronizing the data item corresponding to LUID 1013, and update the anchor to 1013 after executing the instruction successfully and completing the synchronization.

Step S407: The DS server sends Pkg4 to the DS client. Pkg4 carries synchronization response information, indicating success of synchronizing the data items corresponding to LUID 1012 and LUID 1013. The synchronization session is completed.

Step S408: The DS client receives the Pkg4 response message and updates the anchor value to 1013.

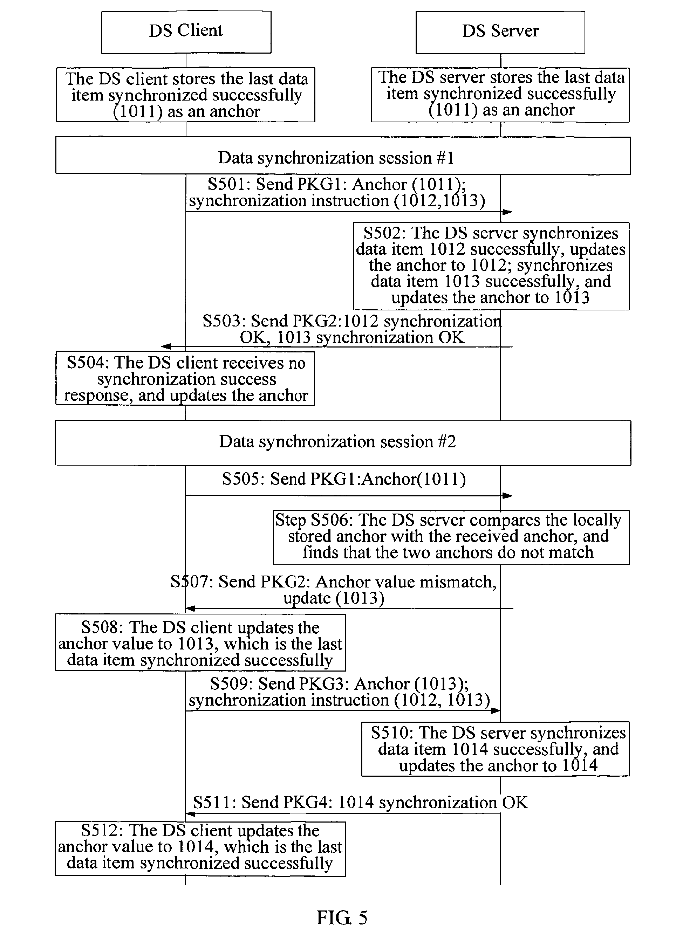

As shown in FIG. 5, the abnormal processing process of a synchronization session includes the following steps:

Step S501: The DS client initiates the first data synchronization session, and sends Pkg1 to the DS server. Pkg1 carries an anchor value 1011 and an instruction of synchronizing the data items corresponding to LUID 1012 and LUID 1013.

Step S502: The DS server receives and reads Pkg1, and then performs the following operations:
compare the locally stored DS client anchor with the received anchor, and, after finding that the two anchors are the same, execute the synchronization command according to the order of the LUID;
execute an instruction of synchronizing the data item corresponding to LUID 1012, and update the anchor to 1012 after executing the instruction successfully and completing the synchronization; and
execute an instruction of synchronizing the data item corresponding to LUID 1013, and update the anchor to 1013 after executing the instruction successfully and completing the synchronization.

Step S503: The DS server sends Pkg2 to the DS client. Pkg2 carries synchronization response information, indicating success of synchronizing the data items corresponding to LUID 1012 and LUID 1013. The synchronization session is completed.

Step S504: The synchronization session is abnormal, and the DS client receives no response message indicating success of synchronizing the data items corresponding to LUID 1012 and LUID 1013. Therefore, the DS client does not update the anchor value.

Step S505: The DS client sends a second data synchronization session, and sends Pkg1 to the DS server. Pkg1 includes the anchor value "1011".

Step S506: The DS server compares the locally stored DS client anchor with the received anchor, and finds that the two anchors do not match.

Step S507: The DS server sends Pkg2 to the DS client. Pkg2 carries the locally stored DS client value "1103".

Step S508: The DS client receives Pkg2, and updates the anchor value to 1103.

Step S509: The DS client sends Pkg3 to the DS server. Pkg3 carries an updated anchor value "1103" and an instruction of synchronizing the data item corresponding to the LUID 1014.

Step S510: The DS server receives Pkg1, reads and matches the anchor value, executes the instruction of synchronizing the data item corresponding to LUID 1014, and updates the anchor to 1014 after executing the instruction successfully and completing the synchronization.

Step S511: The DS server sends Pkg4 to the DS client. Pkg4 carries a response message indicating success of synchronizing the data item corresponding to LUID 1014. The synchronization session is completed.

Step S512: The DS client receives the Pkg4 response message and updates the anchor value to 1014.

The fourth embodiment of the present invention is a method for synchronizing data partially by obtaining device information hierarchically, as detailed below:

In the device information, the LocURI is expressed by an absolute Uniform Resource Identifier (URI) address. The composition of the LocURI is: Starting from the URI of the device information database, the absolute URI of each element is created from the root element downward in the mode specified in the DS DevInf standard.

For example, in the URI "/devinfo20/DevInf/DataStore/CTCap/Property/PropParam", "devinfo20" is the URI of the device information database, "DevInfo" is a root element of the device information, and "DataStore/CTCap/Property/PropParam" is a relative URI address starting from the root element.

The device that receives the Get command returns all subelements and property information of the element indicated by the LocURI to the sending device.

When multiple elements or properties have the same name, the content of a specific element or property may be obtained through a condition matching expression.

The format of the condition matching expression of obtaining the element is:

```
        GET <URI>[Element='Element Value'].
```

The format of the condition matching expression of obtaining the property is:

```
        GET <URI>[@AttributeName='Element_Value'].
```

For example, the following management command may be used to obtain a part of the device information in a database (DataStore) whose DisplayName is "addressbook" on the device:

```
        <Get>
                .....
        <Source>
        <LocURI> /devinfo20/DevInf/Datastore[DisplayName='addressbook']</LocURI>
        </Source>
                .....
        </Get>
```

The embodiments of the present invention do not restrict the expression format.

When the DS server needs to obtain the device information of the DS client, the Source address in the Get command may carry an identifier of obtaining the next level of information only so that the receiver returns only the device information on the next level of the specified address.

It is assumed that three databases (DataStore) exist on the DS client: "addressbook", "email", and "calendar". The DS server can use the following synchronization command to know which DataStores exist on the DS client:

```
        <Get>
        <Source>
                .....
        <LocURI> /devinfo20/DevInf/Datastore?child</LocURI>
        </Source>
                .....
        </Get>
```

After receiving the command, according to the identifier of obtaining only the next level of information in the Source address, the DS client determines that the DS server needs only to know information about the DataStores. Therefore, the DS client returns only names of the three DataStores "addressbook", "email", and "calendar" rather than returns the device information under all DataStores.

In this way, futile information transmission is cut down.

The fifth embodiment of the present invention is a method for synchronizing data partially by obtaining directory structure information hierarchically, as detailed below.

Leaf nodes (data elements) and interior nodes (folders) exist in the database of the terminal and the server. In order to implement partial synchronization, both parties need to obtain the directory structure of the opposite party so as to synchronize a specific folder.

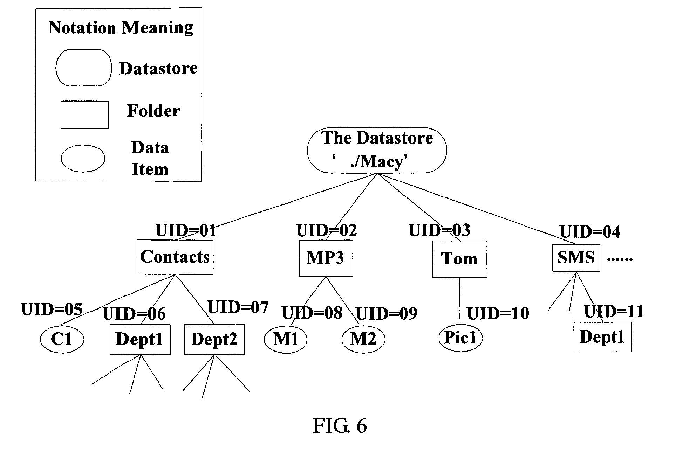

For example, in the database directory structure shown in FIG. 6, three methods are available for obtaining the directory structure, including:

### (1) Obtaining all leaf nodes and interior nodes under a database or interior node

An applicable command is: GET <URI>?list=AllStruct.

For example, the server may use the following command to obtain all leaf nodes and interior nodes in the database of the terminal:

```
        <Get>
        <CmdID>4</CmdID>
        <Item>
        <Target><LocURI>./Macy?List=AllStruct</LocURI></Target>
        </Item>
        </Get>
```

The terminal should return the path information of all nodes from UID 01 to UID 11. It is worthy of attention that no content of the node needs to be returned.

If the command is GET <URI>, it is necessary to return all nodes and the content in each node in the database.

### (2) Obtaining the first level of subnodes of a database or interior node

An applicable command is: GET <URI>?list=DirectChild.

For example, the server may use the following command to obtain the first level of subnode in the database of the terminal:

```
        <Get>
        <CmdID>4</CmdID>
        <Item>
        <Target><LocURI>./Macy?List=DirectChild</LocURI></Target>
        </Item>
        </Get>
```

The terminal should return the path information of the nodes corresponding to UID 01, 02, 03, and 04.

The first level of subnodes may be interior nodes and/or leaf nodes.

### (3) Obtaining all interior nodes of a database or interior node

An applicable command is: GET <URI>?list=InteriorNode.

For example, the server may use the following command to obtain all interior nodes in the database of the terminal:

```
        <Get>
        <CmdID>4</CmdID>
        <Item>
        <Target><LocURI>./Macy?List=InteriorNode</LocURI></Target>
        </Item>
        </Get>
```

The terminal should return the path information of the nodes corresponding to UID 01, 02, 03, 04, 06, 07, and 11.

Through the foregoing obtaining modes, both parties know the database directory structure of the opposite party, and can perform partial synchronization for an interior node more conveniently. The mode of obtaining the database directory information hierarchically overcomes the functional defects of the conventional art in such an aspect.

The sixth embodiment of the present invention is a method for synchronizing data of a property level precisely by searching for the changed property through data fingerprint comparison, as detailed below:

The generation of the data fingerprint includes: generation of a property fingerprint, concatenation of property fingerprints, and data element fingerprint computation. First, the fingerprints are generated according to the property of the data element. A fingerprint is generated for each property, and all properties are concatenated, and then the fingerprints of the whole data element are obtained through a fingerprint computation program. In this way, through the fingerprint of the property level, the changed properties can be found.

For example, these properties exist under an email: READ, FORWARD, REPLIED, RECEIVED, CREATED, MODIFIED, DELETED, FLAGGED. A change flag is used as fingerprint of each property, "0" indicates no change, and "1" indicates change. Supposing that every property keeps synchronous at the beginning, the fingerprint of the data element is: 00000000. Supposing that only the DELETED property of the email is changed, its fingerprint changes to: 00000010. When the terminal sends the fingerprint to the server, through the fingerprint, the server knows that only the value of the DELETED property is changed, and obtains only this property through a Get command.

It is worthy of attention that the order of the properties for generating the fingerprints needs to be agreed on. Otherwise, different order of the properties leads to different fingerprints.

The fingerprints of the property level help implement data synchronization of the property level. Such a method of searching for the changed properties may be a powerful supplement to the method of using a change log to record the changed information, and provides more choices for finding and recording the change information of the property level accurately.

Data fingerprints may be sent by one party to the other party in the synchronization, or one party use a Get command to obtain the data fingerprints from the other party. The format of a Get command is similar to:

```
        <Get>
        <CmdID>4</CmdID>
        <Item>
        <Target><LocURI>./Macy/1112@FP</LocURI></Target>
        </Item>
        </Get>
```

The foregoing command refers to obtaining the fingerprints of the data element whose UID is 1112 in the database Macy.

The embodiments of the present invention do not restrict the expression mode of the command.

Through the foregoing embodiment, it is convenient to know which properties have changed, and only the changed properties need to be synchronized in the synchronization process, thus reducing futile data transmission.

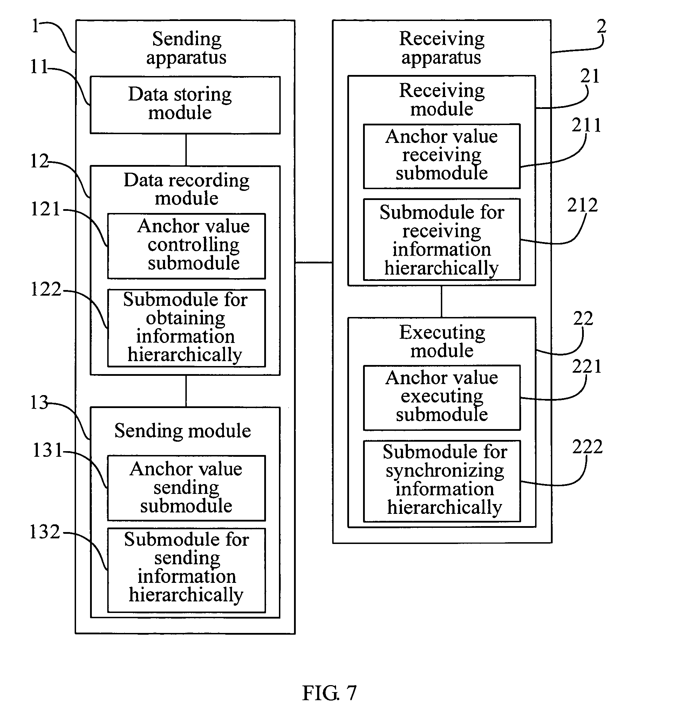

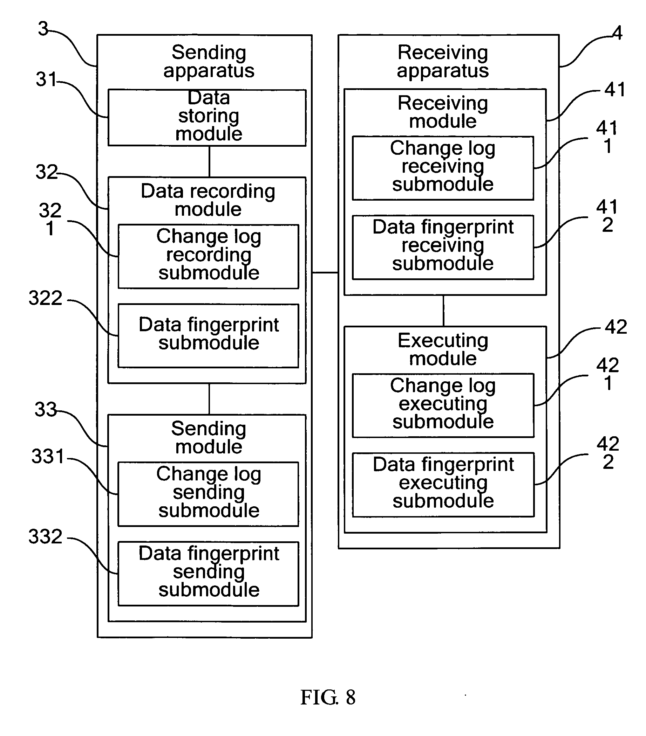

FIG. 7 and FIG. 8 show structures of a sending apparatus and a receiving apparatus in an embodiment of the present invention. The novelty of the apparatus is:
a data recording module, which makes the comparison between the change log information record and the data fingerprint be as precise as a property level;
an anchor value controlling submodule, which implements the function of using the anchor value of the data item level to identify the synchronization progress in the synchronization process; and
a submodule for obtaining information hierarchically, which obtains the device information and the database directory structure information hierarchically, makes the synchronization information be located more precisely, saves the traffic of data transmission, saves network resources, and improves the efficiency of data synchronization.

To fulfill such technical features, a sending apparatus 1 is provided in an embodiment of the present invention. The sending apparatus includes:
a data storing module 11, adapted to store data;
a data recording module 12, adapted to search for and record data items to be synchronized in the data stored in the data storing module 11; and
a sending module 13, adapted to send a synchronization instruction and the data items to be synchronized.

In a sending apparatus in another embodiment of the present invention, the data recording module 12 further includes an anchor value controlling submodule 121, adapted to: generate an anchor value which is a data item ID for locating the progress of synchronization of the data item level, and receive and record the returned updated anchor value. The sending module 13 further includes an anchor value sending submodule 131, adapted to send the anchor value generated by the anchor value controlling submodule 121. The sending apparatus 1 of this structure corresponds to the third embodiment of the present invention.

In a sending apparatus in another embodiment of the present invention, the data recording module 12 further includes a submodule 122 for obtaining information hierarchically, adapted to obtain device information and database directory information hierarchically in the data storing module 11. The sending module 13 further includes a submodule 132 for sending information hierarchically, adapted to send the device information and database directory information obtained by the submodule 122 for obtaining information hierarchically. The sending apparatus 1 of this structure corresponds to the fourth embodiment and the fifth embodiment of the present invention.

The anchor value controlling submodule 121 and the anchor value sending submodule 131 may be combined with the submodule 122 for obtaining information hierarchically and the submodule 132 for sending information hierarchically in the sending apparatus 1, or may exist independently.

A receiving apparatus 2 provided in an embodiment of the present invention includes:
a receiving module 21, adapted to receive a synchronization instruction and data items to be synchronized; and
an executing module 22, adapted to perform synchronization for the data items according to the synchronization instruction.

In a receiving apparatus in another embodiment of the present invention, the receiving module 21 further includes an anchor value receiving submodule 211, adapted to receive an anchor value which is a data item ID for locating the progress of synchronization of the data item level. The executing module 22 further includes an anchor value executing module 221, adapted to: judge whether the received anchor value matches the locally stored anchor value, perform update according to the judgment result, and feed back the update result and the updated anchor value. The sending apparatus 2 of this structure corresponds to the third embodiment of the present invention.

In a receiving apparatus in another embodiment of the present invention, the receiving module 21 may further include: a submodule 212 for receiving information hierarchically, adapted to receive the device information and database directory information obtained hierarchically. The executing module 22 further includes a submodule 222 for synchronizing information hierarchically, adapted to perform synchronization for the specified elements or properties of the device which are obtained hierarchically according to the synchronization instruction. The sending apparatus 2 of this structure corresponds to the fourth embodiment and the fifth embodiment of the present invention.

The anchor value receiving submodule 211 and the anchor value executing submodule 221 1 may be combined with the submodule 212 for receiving information hierarchically and the submodule 222 for synchronizing information hierarchically in the sending apparatus 2, or may exist independently.

A sending apparatus 3 provided in an embodiment of the present invention includes:
a data storing module 31, adapted to store data;
a data recording module 32, adapted to search for and record properties to be synchronized in each data item of the data stored in the data storing module 31; and
a sending module 33, adapted to send a synchronization instruction and the properties to be synchronized.

In a sending apparatus in another embodiment of the present invention, the data recording module 32 further includes a change log recording submodule 321, adapted to record the name of changed properties and the operation type in the change log. The sending module 33 further includes a change log sending submodule 331, adapted to send the name of changed properties and the operation type recorded by the change log recording submodule 321. The sending apparatus 3 of this structure corresponds to the first embodiment of the present invention.

In a sending apparatus in another embodiment of the present invention, the data recording module 32 further includes a data fingerprint submodule 322, adapted to generate data fingerprints, compare the data fingerprints, and search for data change records. The sending module 33 further includes a data fingerprint sending submodule 332, adapted to send the data change records found by the data fingerprint submodule 322. The sending apparatus 3 of this structure corresponds to the sixth embodiment of the present invention.

The change log recording submodule 321 and the change log sending submodule 331 may be combined with the data fingerprint submodule 332 and the data fingerprint sending submodule 332 in the sending apparatus 3, or may exist independently.

A receiving apparatus 4 provided in an embodiment of the present invention includes:
a receiving module 41, adapted to receive a synchronization instruction and properties to be synchronized in each data item; and
an executing module 42, adapted to perform synchronization for the properties to be synchronized according to the synchronization instruction.

In a receiving apparatus in another embodiment of the present invention, the receiving module 41 further includes a change log receiving submodule 411, adapted to receive the change log which records the name of changed properties and the operation type. The executing module 42 further includes a change log executing submodule 421, adapted to perform synchronization for the changed properties recorded in the change log according to the synchronization instruction. The sending apparatus 4 of this structure corresponds to the first embodiment of the present invention.

In a receiving apparatus in another embodiment of the present invention, the receiving module 41 further includes a data fingerprint receiving submodule 412, adapted to receive the data change records obtained through comparison of the data fingerprints. The executing module 42 further includes a data fingerprint executing submodule 422, adapted to perform synchronization for the changed properties corresponding to the data change records obtained through comparison of the data fingerprints according to the synchronization instruction. The sending apparatus 4 of this structure corresponds to the sixth embodiment of the present invention.

The change log receiving submodule 411 and the change log executing submodule 421 may be combined with the data fingerprint receiving submodule 412 and the data fingerprint executing submodule 422 in the sending apparatus 3, or may exist independently.

In the embodiments of the present invention, through the technology and the apparatus of performing refined data synchronization of the property and performing partial synchronization, the data change information of the property is synchronized between devices according to an instruction, the resource waste caused by futile retransmission of data is overcome, the function of obtaining device information and database directory structure information hierarchically is improved and added, transmission traffic is reduced, network resources are saved, and efficiency of data synchronization is improved.

After reading the foregoing embodiments, those skilled in the art are clearly aware that the present invention may be implemented through hardware, or through software in addition to a necessary universal hardware platform. The technical solution under the present invention may be embodied as a software product. The software product may be stored in a non-volatile storage medium (such as CD-ROM, USB flash disk, or mobile hard disk), and may include several instructions that enable a computer device (such as personal computer, server, or network device) to perform the methods provided in the embodiments of the present invention.

The above descriptions are merely preferred embodiments of the present invention, but not intended to limit the scope of the present invention. Any modification, equivalent replacement, or improvement made without departing from the spirit and principle of the present invention should fall within the scope of the present invention.

## Claims

1. A method for synchronizing data between a client and a server, comprising:
receiving a synchronization instruction and data items to be synchronized; and
performing synchronization for the data items to be synchronized according to the synchronization instruction.

2. The data synchronization method of claim 1, wherein:
the data items to be synchronized are initialized synchronization packets that carry an anchor value, and the anchor value is a data item identifier for locating progress of the synchronization of a data item level; and the synchronization performed for the data items to be synchronized according to the synchronization instruction further comprises:
judging whether the received anchor value matches locally stored anchor value; and
performing the synchronization according to a judgment result, and feeding back a synchronization result and an updated anchor value.

3. The data synchronization method of claim 2, wherein:
the data item identifier saved as the anchor value is an identifier of a last data item synchronized successfully in a previous synchronization session.

4. The data synchronization method of claim 2, wherein the synchronization performed according to the judgment result is:
if the anchor value matches, proceeding with the synchronization for the data item; or
if the anchor value does not match, updating an old anchor value, and repeating the foregoing judgment.

5. The data synchronization method of claim 2, further comprising:
if the synchronization result is success, storing the updated anchor value at a sending party; or
if the synchronization result is failure or if the synchronization result is not received, receiving a new synchronization instruction and executing it.

6. The data synchronization method of claim 1, wherein:
if the data items to be synchronized are specified elements or properties of a device which are obtained hierarchically, the synchronization performed for determined data items to be synchronized according to the synchronization instruction further comprises: performing the synchronization for the specified elements or properties of the device which are obtained hierarchically.

7. The data synchronization method of claim 6, wherein:
the specified elements or properties of the device are specified through a logical expression, or lower-level elements are specified through the expression.

8. The data synchronization method of claim 1, wherein:
the data items to be synchronized are specified directories or nodes obtained hierarchically in a device database.

9. The data synchronization method of claim 8, wherein the specified directories or nodes obtained hierarchically in the device database are:
all leaf nodes and interior nodes under the database or an interior node; or
a first level of subnodes under the database or an interior node; or
all interior nodes under the database or an interior node.

10. The data synchronization method of claim 8, wherein:
the specified directories or nodes obtained hierarchically in the device database are specified in a Uniform Resource Identifier (URI) of a GET command.

11. A method for synchronizing data between a client and a server, comprising:
receiving a synchronization instruction and properties to be synchronized in each data item;
and
performing synchronization for the properties to be synchronized according to the synchronization instruction.

12. The data synchronization method of claim 11, wherein:
the properties to be synchronized in the data item are determined according to records about names of changed properties of the data items and an operation type.

13. The data synchronization method of claim 12, wherein:
the names of the changed properties of the data items and the operation type are recorded in a change log, and comprise identifiers of the properties to be synchronize in the data items and change types, and therefore, the synchronization performed for the properties to be synchronized in the data items according to the synchronization instruction further comprises: performing synchronization for the properties corresponding to identifiers of the changed properties according to the synchronization instruction.

14. The data synchronization method of claim 12, wherein:
the names of the changed properties of the data items and/or the operation type are determined through comparison of data fingerprints, and therefore, the synchronization performed for the determined properties to be synchronized according to the synchronization instruction further comprises: performing synchronization for the changed properties determined through the comparison of the data fingerprints according to the synchronization instruction.

15. The data synchronization method of claim 14, wherein:
the data fingerprints are obtained through concatenation of property fingerprints through a fingerprint computation program, wherein the property fingerprints are generated according to each property of a data element.

16. The data synchronization method of claim 14, wherein:
the data fingerprints are obtained through a GET command.

17. A sending apparatus, comprising:
a data storing module, adapted to store data;
a data recording module, adapted to search for and record data items to be synchronized in the data stored in the data storing module; and
a sending module, adapted to send a synchronization instruction and the data items to be synchronized.

18. The sending apparatus of claim 17, wherein:
the data recording module further comprises an anchor value controlling submodule, which is adapted to: generate an anchor value which is a data item identifier for locating progress of synchronization of a data item level, and receive and record a returned updated anchor value; and therefore, the sending module further comprises an anchor value sending submodule, which is adapted to send the anchor value generated by the anchor value controlling submodule.

19. The sending apparatus of claim 17, wherein:
the data recording module further comprises a submodule for obtaining information hierarchically, which is adapted to obtain device information and database directory information hierarchically in the data storing module; and therefore, the sending module further comprises a submodule for sending information hierarchically, which is adapted to send the device information and the database directory information obtained by the submodule for obtaining information hierarchically.

20. A receiving apparatus, comprising:
a receiving module, adapted to receive a synchronization instruction and data items to be synchronized; and
an executing module, adapted to perform synchronization for the data items according to the synchronization instruction.

21. The receiving apparatus of claim 20, wherein:
the receiving module further comprises an anchor value receiving submodule, which is adapted to receive an anchor value that is a data item identifier for locating progress of synchronization of a data item level; and therefore, the executing module further comprises an anchor value executing submodule, which is adapted to: judge whether the received anchor value matches a locally stored anchor value, perform update according to a judgment result, and feed back an update result and an updated anchor value.

22. The receiving apparatus of claim 20, wherein:
the receiving module further comprises a submodule for receiving information hierarchically, which is adapted to receive device information and database directory information obtained hierarchically; and therefore, the executing module further comprises a submodule for synchronizing information hierarchically, which is adapted to perform synchronization for specified elements or properties of a device which are obtained hierarchically according to the synchronization instruction.

23. A sending apparatus, comprising:
a data storing module, adapted to store data;
a data recording module, adapted to search for and record properties to be synchronized in data items of the data stored in the data storing module; and
a sending module, adapted to send a synchronization instruction and the properties to be synchronized.

24. The sending apparatus of claim 23, wherein:
the data recording module further comprises a change log recording submodule, which is adapted to record names of changed properties and an operation type in a change log; and therefore, the sending module further comprises a change log sending submodule, which is adapted to send the names of the changed properties and the operation type recorded in the change log recording submodule.

25. The sending apparatus of claim 23, wherein:
the data recording module further comprises a data fingerprint submodule, which is adapted to generate data fingerprints, compare the data fingerprints, and search for data change records; and therefore, the sending module further comprises a data fingerprint sending submodule, which is adapted to send the data change records found by the data fingerprint submodule.

26. A receiving apparatus, comprising:
a receiving module, adapted to receive a synchronization instruction and properties to be synchronized in each data item; and
an executing module, adapted to perform synchronization for the properties to be synchronized according to the synchronization instruction.

27. The receiving apparatus of claim 26, wherein:
the receiving module further comprises a change log receiving submodule, which is adapted to receive a change log that records names of changed properties and an operation type; and therefore, the executing module further comprises a change log executing submodule, which is adapted to perform synchronization for the changed properties recorded in the change log according to the synchronization instruction.

28. The receiving apparatus of claim 26, wherein:
the receiving module further comprises a data fingerprint receiving submodule, which is adapted to receive data change records obtained through comparison of data fingerprints; and
the executing module further comprises a data fingerprint executing submodule, which is adapted to perform synchronization for changed properties corresponding to the data change records obtained through the comparison of the data fingerprints according to the synchronization instruction.
